# EUROPEAN PATENT SPECIFICATION

(11) **EP 0 343 295 B1**
(45) Date of publication and mention of the grant of the patent: **20.10.1993**
(21) Application number: 88304871.2
(22) Date of filing: 27.05.1988
(51) Int. Cl.: G01S 1/02, G01S 1/56

(54) **Automatic, real-time fault monitor verifying network in a microwave landing system**
Automatische Überprüfungsschaltung in Echtzeit für einen Fehlermonitor in einem Mikrowellenlandesystem
Circuit de vérification automatique en temps réel d'un moniteur de défaut dans un système d'atterrissage par micro-ondes

(43) Date of publication of application: 29.11.1989
(73) Proprietor: HAZELTINE CORPORATION, Greenlawn New York 11740 (US)
(72) Inventor: Roelofs, Darrell D., Huntington Station New York 11746 (US); Lopez, Alfred R., Commack New York 11725 (US); Doris, Kenneth R., Setauket New York 11733 (US)
(74) Representative: Wood, Anthony Charles

(56) References cited:
- GB-A- 2 203 915
- US-A- 4 647 926
- US-A- 4 654 817
- US-A- 4 739 351
- NAVIGATION, vol. 29, no. 114, April 1981, pages 174-187, Paris, FR; B. LETOQUART et al.: "Le MLS un exemple d'utilisation du microprocesseur"
- IEEE, COMPUTER SOCIETY INTERNATIONAL CONFERENCE, Washington, D.C., 7th-10th September 1976, no. 13, pages 264-268, New York, US; J.M. HUGHES: "Multimicroprocessor navigation systems"

## Description

The present field of the invention relates to a process and network in which an executive monitor is connected within a microwave landing system ("MLS") to evaluate whether or not an internally-generated out-of-tolerance signal activates an alarm system. If the alarm system is activated, then the proper fault monitoring function of the executive monitor is verified.

An instrument landing system ("ILS") has served as the prior art approach and landing aid for aircraft for many years. The ILS, however, has a number of basic limitations, such as being site critical and expensive to install, being sensitive to extraneous reflections, having a limited number of channels, lacking the flexibility required for aircraft operations, and producing erroneous information in rough terrain and mountainous regions. As a result of these limitations, an MLS has been proposed as a standard ILS replacement for world-wide implementation since it can reduce or eliminate these basic limitations.

The MLS consists of various antenna stations adjacent to a runway which transmit wave energy information to approaching aircraft enabling said aircraft to calculate the following data to safely land on an airport runway: azimuth from an AZ station, elevation from an EL station, range from a precision distance measuring equipment (DME/P) station, and back azimuth from a BAZ station. The AZ station provides an aircraft with heading or approach guidance to runways or helo pads at an airport. The EL station provides for a wide selection of glide slope angles needed by a pilot to land his plane safely on a runway. The DME/P station provides for continuous range information needed by a pilot to ascertain the distance between his aircraft and the airport runway on which he is landing. The BAZ station is similar to the AZ station and is intended to supply guidance to a pilot for missed approaches to and departures from an airport.

More specifically, the AZ station includes an antenna which generates a narrow, vertical, fan-shaped beam which sweeps to and fro across the area to be covered by the AZ station. Before the start of a scan a test pulse is transmitted, then the "to" scan starts. At the end of the scan, there is a pause before the "fro" scan starts. A second test pulse marks the end of the scanning cycle. The aircraft receives a "to" pulse and a "fro" pulse. The time difference between pulses is then measured by the aircraft and gives the angular location of the aircraft relative to the AZ station. The EL station also includes an antenna which generates a narrow horizontal fan-shaped beam which sweeps up and down through the area to be covered at the airport. The time difference between receipt of the up and down pulses is used by the aircraft to determine the elevation angle of the aircraft relative to the EL station and thus its displacement from the glide path angle selected by the pilot to land his aircraft on a runway. The elevation scan cycle requires much less time than the azimuth scan cycle. The elevation scan cycle is normally repeated 39 times per second as compared with 13 times per second for the azimuth cycle. The BAZ station includes an antenna which generates a narrow, fan-shaped, vertical beam which sweeps to and fro horizontally through the area to be covered at the airport. The same angular measurement principle used for determining the approach AZ angle is used for determining the BAZ angle. The DME/P station includes an antenna which transmits wave energy travelling at a known rate. By calculating the time the wave energy travels from the antenna to the aircraft and knowing the rate at which the wave energy travels, the distance or range between aircraft and the airport station can be calculated. The above information is calculated by the approaching aircraft as a direct result of the meaningful information transmitted by the antenna stations included within a given MLS at an airport.

The MLS is capable of operating on any one of 200 channels in the microwave frequency band. The present microwave frequencies in use are between 5043 and 5090.7 megahertz. The AZ, BAZ and EL stations all transmit on the microwave frequency. The DME/P station transmits a paired frequency in L-Band. The MLS signal format has the potential to transmit signals from the abovementioned various stations in any desired order to approaching aircraft. A preamble or data word is transmitted by each station to approaching aircraft prior to the main wave energy being transmitted in order to inform the approaching aircraft of which function (AZ, EL, BAZ, DME/P) will be transmitted next. As soon as the aircraft decodes the message it waits for the wave energy to be received in order to perform the desired calculation. Then, the aircraft awaits the next preamble to ascertain the identity of the next transmitted function. As can readily been seen, the MLS has numerous advantages over the ILS.

All MLS installations transmit the following basic data to approaching aircraft: facility (landing runway) identification; azimuth threshold distance, coverage and off-set (distance from AZ antenna to fixed spot on center line of runway); beam widths (AZ, EL); DME/P distance, off-set and channel (distance between station and runway); and elevation height, off-set and distance from threshold. Most of this information is needed by the equipment aboard the approaching aircraft to make the necessary computations for an approach to the airport. Any malfunction in the MLS equipment will cause the approaching aircraft to make faulty calculations and rely upon erroneous data. For this reason, it is absolutely essential to continuously maintain the MLS system and to verify that the MLS system stations are transmitting accurate information.

The MLS was the first system designed to utilize a maintenance program. The advantages of such a maintenance program include a reduction in the time spent in travel maintaining the system and a reduction in the maintenance and record-keeping for the system, which in turn allows more effective use of a smaller number of maintenance personnel operating from a smaller number of maintenance bases. Overall, such a maintenance program is economical, reliable, and efficient.

Each MLS station is supported by an executive monitor and a maintenance field monitor, both of which are tools implementing the maintenance program. The executive monitor samples the information being transmitted by each antenna station to approaching aircraft. In other words, the executive monitor evaluates the same information that the antenna is transmitting to approaching aircraft to ensure that the information being sent to the aircraft is reliable. For example, the executive monitor checks the accuracy of the angle code throughout the antenna coverage and thus can detect when a given sample of the angle code is beyond a predetermined limit. Examples of such transmitted signals which are checked by the executive monitor to ascertain whether or not they have a characteristic which is out-of-tolerance are (a) scanning beam mean angle error, (b) function preamble, (c) effective radiated power (whether it be for the function preamble, the EL and BAZ scanning beams, clearance pulses, or an out of coverage indicator), (d) timing error in signal format, (e) synchronizaton error in time division multiplexing, (f) digital phase shift keying ("DPSK") data transmission, (g) interstation synchronization, (h) array integrity parameters (such as dynamic sidelodes, channel failures, frequency channels, etc.), and (i) clearance angle. If any of these transmitted signals a-j have a characteristic which is out-of-tolerance, then the executive monitor automatically initiates an alarm, the station is shut down, and the approaching aircraft does not receive information from that station. The AZ, EL, BAZ, and DME/P antenna stations each contain an executive monitor. If the EL or BAZ station is shut down, the other stations are still operable and transmit information to the approaching aircraft. If the AZ station is shut down, however, all stations are disabled and do not transmit information to approaching aircraft. Since the executive monitor initiates an alarm and shuts down a station or the system when an out-of-tolerance characteristic is detected over a predetermined period of time, it is necessary to verify that the fault monitoring function of the executive monitor is operating properly and will provide such an alarm when such an out-of-tolerance characteristic is detected over that predetermined period of time. Otherwise, an approaching aircraft may be erroneously relying on MLS supplied information which should have generated an alarm and shut down the station or the MLS without transmitting information to approaching aircraft.

An object of the invention is automatic real-time verification of the fault monitoring operation of an executive monitor so that an alarm is generated and declared valid when an internally generated out-of-tolerance or erroneous signal is detected by the monitor.

US-A-4739351 describes apparatus for automatically verifying in real-time the proper operation of a fault monitor in an aircraft landing system which includes antenna means for periodically transmitting an aircraft guidance signal intended to have a predetermined characteristic, and monitor means for receiving said transmitted signal and determining whether said characteristic exceeds a predetermined limit; said apparatus comprising:
control means connected to said monitor means for providing a test signal having said characteristic and wherein said characteristic exceeds said predetermined limit;
supply means controlled by said control means for supplying said test signal in place of a said received transmitted signal to the monitor means to permit verification of proper operation of the monitor means and
alarm means associated with said monitor means for generating an alarm when a predetermined condition arises.

The present invention is characterized by:
memory means for storing a first number representative of the number of times said characteristic of said transmitted signal is determined by said monitor means to exceed said predetermined limit in a selected time period;
said alarm means generating said alarm when said stored number becomes a predetermined number;
preconditioning means for replacing said stored first number with a second number between selected transmission periods of said antenna means said second number being one less than said predetermined number; and
said supply means supplying said test signal during the next transmission period following the replacement of said stored first number with said second number by said preconditioning means thereby causing said stored number to become equal to said predetermined number as a result of which said alarm means should generate an alarm to verify proper operation of the fault monitor.

The invention also provides a method as set out in claim 5.

An embodiment of the invention will now be described by way of example, with reference to the accompanying drawings, in which:
Figure lis a schematic block diagram of a circuit for verifying proper operation of the fault monitoring function of the executive monitor according to the invention.

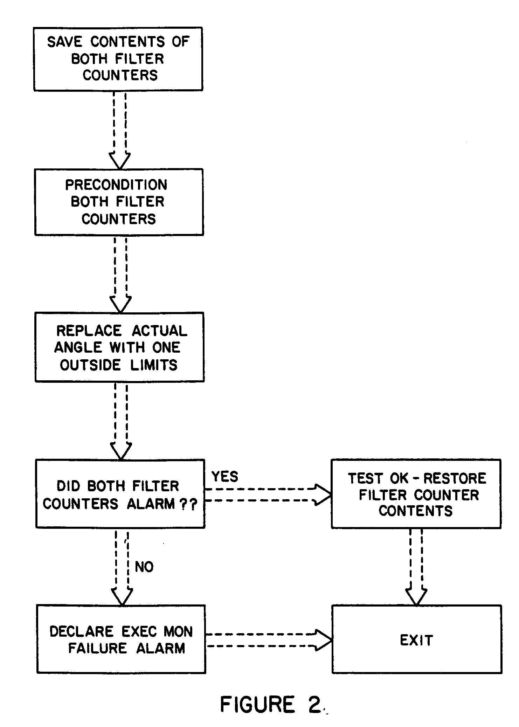

Figure 2 is a flow-chart illustrating a sequence of operations for verifying proper operation of the fault monitoring function of the executive monitor.

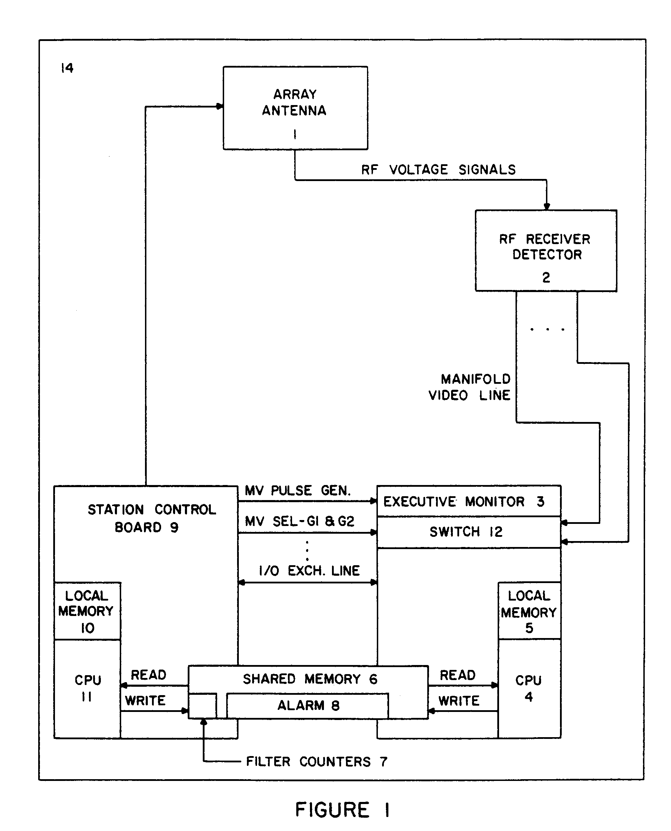

Figure 1 illustrates the EL station 14 components of an MLS system which are used to process one of many MLS signals transmitted to approaching aircraft and to verify the proper functioning of a fault monitor system within the MLS should a signal having an out-of-tolerance characteristic be detected by the MLS system.

Since many signals are verified in an MLS (see signals a-j listed above), the one chosen to best illustrate the invention and the one shown in Figure 1 is the scanning beam mean angle error. Although the scanning beam mean angle error is illustrated, it is to be understood that any of the other signals verified by the landing system could have been chosen to illustrate the invention, and in this regard, the invention is not to be limited to the illustrated signal. The scanning beam mean angle error from an EL station provides the difference between the actual height of the approaching aircraft in angular degrees and the height the approaching aircraft already calculated. The EL station transmits scanning beam mean angle error information to approaching aircraft by an array antenna means 1. The antenna means 1 also samples this transmission internally within the MLS system by providing an output of high frequency RF voltage signals to an RF receiver detector means 2. The detector means 2 in conventional fashion converts the voltage signals into a series of D-C video pulses and outputs them to an executive monitor means 3 over a manifold video line. The executive monitor means 3 contains a local CPU 4, local memory means 5, and a memory means 6 shared with a control means 9, called a station control board.

The shared memory means 6 contains two filter counters 7. Like the executive monitor means 3, the control means 9 also contains a local CPU 11 and memory means 10. CPUs 4 and 11 are thus able to read from or write into the shared memory means 6. CPUs 4 and 11 perform comparisons and calculations. The two filter counters 7 are used in the executive monitor means 3 (together with an angle decoder not shown) to detect the time of occurrence of the rising and falling edges of the video pulses and thus an out-of-tolerance scanning beam angle. If a small scanning beam angle error is detected, one of the two filter counters 7 increments. If a large scanning beam angle error is detected the other filter counter 7 increments. If the calculated scanning beam angle is within a first predetermined limit, then the filter counters 7 decrement, but never below a value of zero. The approaching aircraft detects the same timing information as the executive monitor means 3. The pulse edges are defined as the 3dB points of each pulse and are detected when the video pulse amplitude equals a first reference voltage corresponding to 0.707 times a second reference voltage which is stored in the executive monitor's local memory means 5 in digital form. The comparison of the video pulses with said second reference voltage eliminates the counting of spurious false alarm signals and thus the erroneous calculation of guidance information.

As another safeguard, at least two rising and two falling edges (two pulses) are analyzed in real-time by the CPU 4 in the executive monitor to determine the scanning beam angle error. Thirty-one samples of these paired video pulses must be fed to the two filter counters over a 0.8 second time period in order for the executive monitor to accurately and reliably determine if an out of tolerance scanning beam mean angle error exists. Such determination is made by comparing the number of incremented counts in each filter counter with a second predetermined limit for each stored in memory. If the number of incremented counts exceeds the second predetermined limit for either filter counter, then the filter counter output indicates that mean erroneous guidance - the scanning beam mean angle error is beyond acceptable limits - exists for the prescribed 0.8 second time period; an alarm 8 is, therefore, generated in the executive monitor and noted in the memory means 6 shared by the monitor means 3 and the control means (station control board) 9 when such erroneous guidance is detected. Under these conditions, an alarm signal is then fed by the station control board 9, to the transmitter of the array antenna means 1 shutting the system down. Of course, if erroneous guidance is not indicated by either filter counter, then the alarm system will not be activated and the system will not be shut down. The approaching aircraft realizes that a fault condition has been detected in a particular station when it does not receive any information from that station.

The real-time, automatic operation of the present fault monitoring verification scheme will now be explained with reference to Figure 2. Figure 2 shows through logic the manner in which the proper operation of the fault monitoring function performed by the executive monitor is verified. Using the scanning beam mean angle error parameter by way of example only, verification is accomplished by having the contents of the two filter counters 7 saved in the shared memory means 6 in a location separate and apart from the filter counters 7. Between antenna scans the two filter counters 7 are then provided with a predetermined count that will cause the generation of a real-time, automatic alarm if one more sample outside scanning beam mean angle error limits is received. This preconditioning of the two filter counters is accomplished in the memory means 6 shared by the control means (station control board) 9 and executive monitor means 3 shown in Figure 1. During the next antenna scan, the control means CPU 11 sends a signal over the MV SEL-G1 and G2 line activating switch 12 which replaces the parametric video output received by the executive monitor means 3 with one out-of-tolerance pulse pair sample generated internally. The internally generated out-of-tolerance pulse pair sample is sent by CPU 11 over the MV pulse generator line to the executive monitor which then increments the filter counters 7. The internally generated pulse pair represents a sample outside filter counter limits and when summed with the predetermined count in filter counters 7 should activate alarm 8.

If an alarm is generated as a result of the introduction of the internally-generated out-of-tolerance pulse pair to the filter counters 7, then the test is determined to be valid, i.e. the fault monitoring function of the executive monitor is working properly. Under these conditions, the previously saved contents of both filter counters are restored in order for normal operation of the system to be resumed on the next antenna scan. If either filter counter does not generate an alarm, then an executive monitor failure is declared in the station control board 9, and the actual, real-time alarm is activated. Under these circumstances the station or system is automatically shut down by the station control board 9 and in need of repair. This informs maintenance personnel that the system is not properly monitoring fault conditions when scanning beam mean angle errors in excess of a second predetermined limit are detected. The above real-time verification process is automatic, software controlled, and conducted every 15 minutes in an MLS. The MLS system also can request the performance of a verification test from human sources.

Specific structural details for the shared memory means 6 and local memories 5 and 10 would be apparent to one skilled in the art. Although the alarm 8, and filter counters 7 are shown in Figure 1 to be contained in the shared memory means 6, those functions could be performed by separate hardware or in local memories 5 and 10 with assistance from processors 4 and 11. An arithmetic logic unit could be used in combination with the memories and processors to perform calculations, with intermediate and final results stored in memories 5, 6, or 10. The verification process, although described in reference to an MLS, may be used with any type of landing system. All of the above changes could be made without departing from the true scope of the invention.

## Claims

1. Apparatus for automatically verifying in real-time the proper operation of a fault monitor in an aircraft landing system which includes antenna means (1) for periodically transmitting an aircraft guidance signal intended to have a predetermined characteristic, and monitor means (3) for receiving said transmitted signal and determining whether said characteristic exceeds a predetermined limit; said apparatus comprising:
control means (9,11) connected to said monitor means (3) for providing a test signal having said characteristic and wherein said characteristic exceeds said predetermined limit;
supply means (12) controlled by said control means (9,11) for supplying said test signal in place of a said received transmitted signal to the monitor means (3) to permit verification of proper operation of the monitor means (3); and
alarm means (8) associated with said monitor means (3) for generating an alarm when a predetermined condition arises;
characterized by:
memory means (6) for storing a first number representative of the number of times said characteristic of said transmitted signal is determined by said monitor means (3) to exceed said predetermined limit in a selected time period;
said alarm means (8) generating said alarm when said stored number becomes a predetermined number;
preconditioning means (6,9) for replacing said stored first number with a second number between selected transmission periods of said antenna means (1), said second number being one less than said predetermined number; and
said supply means (12) supplying said test signal during the next transmission period following the replacement of said stored first number with said second number by said preconditioning means (6,9), thereby causing said stored number to become equal to said predetermined number as a result of which said alarm means (8) should generate an alarm to verify proper operation of the fault monitor.

2. Apparatus according to claim 1 characterized in that said alarm means (8) generates a warning signal and causes the antenna means (1) to terminate transmission when said stored number is equal to said predetermined number and a said alarm was not generated as a result thereof.

3. Apparatus according to claim 1 or claim 2 characterized in that said monitor means (3) and said control means (9,11) both include means for writing data into and for reading data from said memory means (6).

4. Apparatus according to any one of claims 1 to 3 characterized in that said control means (9,11) is responsive to generation of a said alarm by said alarm means to control said supply means (12) to cease supplying said test signal and to control said memory means to restore said stored first number, thereby permitting said monitor means (3) to resume normal monitoring of the received signals.

5. A method of automatically verifying in real-time the proper operation of a fault monitor in an aircraft landing system which includes antenna means for periodically transmitting an aircraft guidance signal intended to have a predetermined characteristic, and monitor means for receiving said transmitted signal and determining whether said characteristic exceeds a predetermined limit; said method comprising:
providing a test signal having said characteristic and wherein said characteristic exceeds said predetermined limit;
supplying said test signal in place of a said received transmitted signal to the monitor means to permit verification of proper operation of the monitor means; and
generating an alarm when a predetermined condition arises in relation to the monitor means;
characterized by:
storing in memory a first number representative of the number of times said characteristic of said transmitted signal is determined by the monitor means to exceed said predetermined limit in a selected time period;
said alarm being generated when said stored number becomes a predetermined number;
replacing said stored first number with a second number between selected transmission periods of said antenna means, said second number being one less than said predetermined number; and
said test signal being supplied during the next transmission period following the replacement of said stored first number with said second number, thereby causing said stored number to become equal to said predetermined number as a result of which said alarm should be generated to verify proper operation of the fault monitor.

## Patentansprüche

1. Vorrichtung zum automatischen Prüfen der richtigen Arbeitsweise eines Fehlermonitors in einem Flugzeuglandesystem in Echtzeit, mit Antennenmitteln (1) zum periodischen Senden eines Flugzeugleitsignales, das eine vorbestimmte Charakteristik haben soll, sowie mit Monitormitteln (3) zum Empfangen des gesendeten Signales und zum Entscheiden, ob die Charakteristik eine vorbestimmte Grenze übersteigt aufweist; wobei die Vorrichtung folgendes aufweist:
an die Monitormittel (3) angeschlossene Kontrollmittel (9, 11), um ein Testsignal mit dieser Charakteristik zu liefern, wobei die Charakteristik die vorbestimmte Grenze überschreitet;
von den Kontrollmitteln (9, 11) gesteuerte Bereitstellungsmittel (12), um anstelle eines empfangenen übertragenen Signales das Testsignal in das Monitormittel (3) einzuspeisen, um eine Überprüfung der richtigen Arbeitsweise der Monitormittel (3) zu erlauben; und
mit den Monitormitteln (3) verbundene Alarmmittel (8) zum Erzeugen eines Alarmes, wenn eine vorbestimmte Bedingung eintritt; gekennzeichnet durch:
Speichermittel (6) zum Speichern einer ersten Zahl, die anzeigt wie oft die Monitormittel bestimmt haben, daß das übertragene Signal die vorbestimmte Grenze innerhalb eines ausgewählten Zeitabschnittes überschritten hat;
wobei die Alarmmittel (8) den Alarm erzeugen, wenn die gespeicherte Anzahl eine vorbestimmte Zahl erreicht;
Voreinstellmittel (6, 9) zum Ersetzen der gespeicherten ersten Zahl durch eine zweite Zahl zwischen Sendeperioden der Antennenmittel (1), wobei die zweite Zahl um eins geringer ist als die vorbestimmte Zahl; und
wobei die Bereitstellungsmittel (12) das Testsignal während der nächsten Übertragungsperiode einspeisen, die auf das Ersetzen der gespeicherten ersten Zahl durch die zweiten Zahl durch die Voreinstellmittel (6, 9) folgt, wodurch verursacht wird, daß die gespeicherte Zahl gleich der vorbestimmten zahl wird, damit das Alarmmittel (8) einen Alarm zum Überprüfen der richtigen Arbeitsweise des Fehlermonitors erzeugt.

2. Vorrichtung nach Anspruch 1, dadurch gekennzeichnet, daß das Alarmmittel (8) ein Warnsignal erzeugt und die Antennenmittel (1) veranlaßt, die Übertragung abzubrechen, wenn die gespeicherte Zahl gleich der vorbestimmten Zahl ist und der Alarm nicht als Ergebnis davon erzeugt worden ist.

3. Vorrichtung nach Anspruch 1 oder 2, dadurch gekennzeichnet, daß die Monitormittel (3) und die Kontrollmittel (9, 10) Mittel zum Einschreiben und Auslesen von Daten in bzw. aus den Speichermitteln (6) aufweisen.

4. Vorrichtung nach einem der Ansprüche 1 bis 3, dadurch gekennzeichnet, daß die Kontrollmittel (9, 10) in Abhängigkeit von der Erzeugung des Alarms durch die Alarmmittel arbeiten, um die Bereitstellungsmittel (12) so zu steuern, daß sie aufhören, das Testsignal zu liefern, und um das Speichermittel zu veranlassen, die gespeicherte erste Zahl zurückzuspeichern, wobei den Monitormitteln (3) gestattet wird, das normale Anzeigen von empfangenen Signalen wieder aufzunehmen.

5. Verfahren zum automatischen Überprüfen der richtigen Arbeitsweise eines Fehlermonitors eines Flugzeuglandesystems in Echtzeit, das Antennenmittel zum periodischen Senden eines Flugzeugführungssignales, das eine vorbestimmte Charakteristik haben soll, sowie Monitormittel zum Empfangen des übertragenen Signales und zum Bestimmen, ob die Charakteristik eine vorbestimmte Grenze überschreitet, aufweist, wobei das Verfahren umfaßt:
das Vorsehen eines Testsignales mit dieser Charakteristik, wobei die Charakteristik die vorbestimmte Grenze überschreitet;
das Liefern des Testsignales anstelle des empfangenen gesendeten Signales an die Monitormittel, um die Überprüfung der richtigen Arbeitsweise der Monitormittel zu gestatten; und
das Erzeugen eines Alarmes, wenn in Bezug auf die Monitormittel eine vorbestimmte Bedingung eintritt;
gekennzeichnet durch:
das Speichern einer ersten Zahl in einem Speicher, die anzeigt, wie oft das Monitormittel bestimmt hat, daß, die Charakteristik des übertragenen Signales die vorbestimmte Grenze in einem ausgewählten Zeitabschnitt überschritten hat;
wobei der Alarm erzeugt wird, wenn die gespeicherte Zahl gleich einer vorbestimmten Zahl wird;
das Ersetzen der gespeicherten ersten Zahl durch eine zweite Zahl zwischen ausgewählten Sendeperioden der Antennenmittel, wobei die zweite Zahl um 1 geringer als die vorbestimmte Zahl ist; und wobei das Testsignal während der nächsten Übertragungsperiode, die auf das Ersetzen der gespeicherten ersten Zahl mit der zweiten Zahl folgt, geliefert wird, wodurch verursacht wird, daß die gespeicherte Zahl gleich der vorbestimmten Zahl wird, wodurch der Alarm erzeugt werden sollte, um die richtige Arbeitsweise des Fehlermonitors zu überprüfen.

## Revendications

1. Appareil pour vérifier automatiquement en temps réel le bon fonctionnement d'un moniteur de défaut dans un système d'atterrissage d'aéronef qui comprend une structure d'antenne (1) pour émettre périodiquement un signal de guidage d'aéronef devant avoir une caractéristique prédéterminée, et des moyens de surveillance (3) pour recevoir le signal émis et pour déterminer si la caractéristique précitée dépasse une limite prédéterminée; cet appareil comprenant :
des moyens de commande (9, 11) connectés aux moyens de surveillance (3) pour produire un signal de test ayant la caractéristique précitée et dans lequel cette caractéristique dépasse la limite prédéterminée;
des moyens d'application de signal (12) commandés par les moyens de commande (9, 11), pour appliquer le signal de test aux moyens de surveillance (3), à la place du signal émis et reçu, pour permettre la vérification du bon fonctionnement des moyens de surveillance (3); et
des moyens d'alarme (8) associés aux moyens de surveillance (3) pour générer une alarme lorsqu'une condition prédéterminée survient;
caractérisé par :
des moyens de mémoire (6) pour enregistrer un premier nombre représentatif du nombre de fois que les moyens de surveillance (3) déterminent que la caractéristique précitée du signal émis dépasse la limite prédéterminée pendant une durée sélectionnée;
les moyens d'alarme (8) générant l'alarme lorsque le nombre enregistré devient un nombre prédéterminé;
des moyens de préconditionnement (6, 9) destinés à remplacer le premier nombre enregistré par un second nombre entre des périodes d'émission sélectionnées de la structure d'antenne (1), ce second nombre étant inférieur d'une unité au nombre prédéterminé; et
par le fait que les moyens d'application de signal (12) appliquent le signal de test pendant la période d'émission qui fait suite au remplacement du premier nombre enregistré par le second nombre, par les moyens de préconditionnement (6, 9), ce qui fait que le nombre enregistré devient égal au nombre prédéterminé, d'où il résulte que les moyens d'alarme (8) doivent générer une alarme pour vérifier le bon fonctionnement du moniteur de défaut.

2. Appareil selon la revendication 1, caractérisé en ce que les moyens d'alarme (8) génèrent un signal d'avertissement et font en sorte que la structure d'antenne (1) cesse d'émettre lorsque le nombre enregistré est égal au nombre prédéterminé et une alarme précitée n'a pas été générée sous l'effet de cette égalité.

3. Appareil selon la revendication 1 ou la revendication 2, caractérisé en ce que les moyens de surveillance (3) et les moyens de commande (9, 11) comprennent tous deux des moyens pour écrire et pour lire des données dans les moyens de mémoire (6).

4. Appareil selon l'une quelconque des revendications 1 à 3, caractérisé en ce que les moyens de commande (9, 11) réagissent à la génération d'une alarme par les moyens d'alarme en commandant aux moyens d'application de signal (12) de cesser l'application du signal de test, et en commandant aux moyens de commande de rétablir le premier nombre enregistré, permettant ainsi aux moyens de surveillance (3) de reprendre la surveillance normale des signaux reçus.

5. Un procédé pour vérifier automatiquement en temps réel le bon fonctionnement d'un moniteur de défaut dans un système d'atterrissage d'aéronef qui comprend une structure d'antenne pour émettre périodiquement un signal de guidage d'aéronef devant avoir une caractéristique prédéterminée, et des moyens de surveillance pour recevoir le signal émis et pour déterminer si la caractéristique précitée dépasse une limite prédéterminée; ce procédé comprenant les opérations suivantes :
on produit un signal de test ayant la caractéristique précitée et dans lequel cette caractéristique dépasse la limite prédéterminée;
on applique ce signal de test aux moyens de surveillance, à la place du signal émis et reçu, pour permettre la vérification du bon fonctionnement des moyens de surveillance; et
on génère une alarme lorsqu'une condition prédéterminée survient en relation avec les moyens de surveillance;
caractérisé en ce que :
on enregistre en mémoire un premier nombre représentatif du nombre de fois que les moyens de surveillance déterminent que la caractéristique précitée du signal émis dépasse la limite prédéterminée, dans une durée sélectionnée;
l'alarme étant générée lorsque le nombre enregistré devient un nombre prédéterminé;
on remplace le premier nombre enregistré par un second nombre, entre des périodes d'émission sélectionnées de la structure d'antenne, ce second nombre étant inférieur d'une unité au nombre prédéterminé; et
le signal de test est appliqué pendant la période d'émission qui fait suite au remplacement du premier nombre enregistré par le second nombre, ce qui fait que le nombre enregistré devient égal au nombre prédéterminé, d'où il résulte que l'alarme doit être générée, pour vérifier le bon fonctionnement du moniteur de défaut.
